# EUROPEAN PATENT APPLICATION

(11) **EP 3 786 218 A1**
(43) Date of publication of application: **03.03.2021**
(21) Application number: 19807993.1
(22) Date of filing: 15.05.2019
(51) Int. Cl.: C08J 5/24, F17C 1/00

(54) **TOWPREG, METHOD FOR MANUFACTURING SAME, AND METHOD FOR MANUFACTURING PRESSURE CONTAINER**

(30) Priority: 21.05.2018 JP 2018096793
(71) Applicant: Toray Industries, Inc., Tokyo, 103-8666 (JP)
(72) Inventor: TSUZUKI, Masahiro, Iyo-gun, Ehime 791-3193 (JP); SANO, Kentaro, Iyo-gun, Ehime 791-3193 (JP); KAMAE, Toshiya, Iyo-gun, Ehime 791-3193 (JP)
(74) Representative: Prüfer & Partner mbB Patentanwälte · Rechtsanwälte
(86) International application number: PCT/JP2019/019337
(87) International publication number: WO 2019/225442

(57) **Abstract**

The present invention addresses the problem of providing: a towpreg that has superior bobbin unspoolability and process pass-through properties, and is capable of yielding a fiber-reinforced composite having extremely high 0° tensile strength utilization; and a pressure vessel using such a towpreg. The means for solving this problem is a towpreg obtained by impregnating a reinforcing fiber tow with an epoxy resin composition containing [A]-[D], wherein: the epoxy resin composition contains 10-90 parts by mass of [A] and 10-50 parts by mass of [B] per 100 parts by mass of the epoxy resin component; the epoxy resin composition has a 25°C viscosity (η₂₅) of 1-40 Pa·s and a 40°C viscosity (η₄₀) of 0.2-5 Pa·s; and the cured epoxy resin composition has a glass transition temperature (Tg) of 95°C or higher. [A] A bisphenol epoxy resin [B] Unsubstituted or substituted N,N-diglycidyl aniline [C] Dicyandiamide [D] A cure accelerator

## Description

### TECHNICAL FIELD

The present invention particularly relates to a towpreg preferably used for the manufacture of hollow containers and cylinders that are made of a fiber reinforced composite. More specifically, the present invention relates to a towpreg that is excellent in an unwinding property from a bobbin and filament winding moldability and can provide a fiber reinforced composite that has an extremely high 0° tensile strength translation rate, and a pressure vessel including such a towpreg.

### BACKGROUND ART

Fiber reinforced composites containing a reinforcing fiber such as a carbon fiber and a glass fiber and a thermosetting resin such as an epoxy resin and a phenol resin are lightweight, and have mechanical properties such as strength and rigidity, heat resistance, and corrosion resistance. Thus, the fiber reinforced composites have been conventionally applied to many fields such as aerospace, automobiles, railroad vehicles, ships, civil engineering and construction, and sporting goods. In particular, in applications in which high performance is required, a fiber reinforced composite containing a continuous reinforcing fiber is used, a carbon fiber that is excellent in specific strength and specific elasticity modulus is used as the reinforcing fiber, and an epoxy resin having excellent adhesion to the carbon fiber is often used as the thermosetting resin.

In the manufacture of the fiber reinforced composite, a prepreg is often used. The prepreg is an intermediate base material containing a unidirectional material including a reinforcing fiber aligned in one direction or a sheet-like material such as a woven fabric or a non-woven fabric, and a thermosetting resin impregnated into the unidirectional material or the sheet-like material. In general, a fiber reinforced composite manufactured by a prepreg method exhibits excellent mechanical properties because the arrangement of the reinforcing fiber is precisely controlled. Meanwhile, as the application of the carbon fiber has expanded in recent years, various molding methods have been developed in accordance with the application. In addition to the prepreg, methods using a liquid resin, such as a hand lay up method, a filament winding method, a pultrusion method, and a resin transfer molding (RTM) method are attracting attention. Among them, the filament winding method is a method preferably used for manufacturing hollow containers and cylinders. In the conventional method of impregnating a fiber with a liquid resin on the spot and winding the fiber around a mandrel (a wet method), however, there are problems that it is difficult to increase the winding speed because the liquid resin is scattered, and that the impregnated state tends to be uneven and the original strength of the reinforcing fiber may not be exhibited. As a material that can solve the problem, a narrow intermediate base material called a towpreg, a tow prepreg, a yarn prepreg, or a strand prepreg (hereinafter referred to as a towpreg), which includes a reinforcing fiber bundle in which thousands to tens of thousands of filaments are arranged in one direction and a thermosetting resin pre-impregnated into the reinforcing fiber bundle, is attracting attention.

The towpreg is once wound around a bobbin after the reinforcing fiber bundle is impregnated with the thermosetting resin in the manufacturing process. Then, in the molding process for the fiber reinforced composite, the towpreg wound around the bobbin is unwound. The towpreg manufactured and used through such a process is required to suppress adhesion or dripping to a device and to have a good yield of the thermosetting resin in the manufacturing process and a good impregnation property of the thermosetting resin into the reinforcing fiber bundle. There are two methods for winding the towpreg around the bobbin. One method is to prevent self-adhesion between the towpregs by using released paper, and the other method without the use of the released paper. Auxiliary materials such as the released paper increase the price of the product, and thus the method without the use of the released paper is desirable. In the method without the use of the released paper, it is essential that the self-adhesiveness is extremely low and that the reinforcing fibers are less likely to fluff or entanglement during unwinding. Furthermore, unlike the case of the wet method, the towpreg needs to be stored until being molded into the fiber reinforced composite, and thus it is also required that there be little change in the self-adhesiveness with time.

Furthermore, a typical example of the hollow container preferably manufactured by the filament winding method using a towpreg is a pressure vessel to be filled with hydrogen gas or the like used in a fuel cell. The pressure vessel is required to have high heat resistance to withstand the temperature rise during gas charging, and to have high tensile strength (0° tensile strength) in the fiber axis direction of the fiber reinforced composite to increase the burst strength. In order to increase the 0° tensile strength of the fiber reinforced composite, in addition to a method of increasing the tensile strength of the reinforcing fiber, there is a method of increasing the 0° tensile strength translation rate. The 0° tensile strength translation rate is an index of degree of utilization of the strength of the reinforcing fiber by the fiber reinforced composite. Under the same kind and amount of the reinforcing fiber, the method of increasing the 0° tensile strength translation rate is useful because a reinforcing fiber having a higher 0° tensile strength is obtained.

Patent Document 1 discloses a method of improving an unwinding property by using a towpreg obtained by impregnating a reinforcing fiber bundle with an epoxy resin having a molecular weight of 5,000 or more and a silicone resin dissolved in an organic solvent, and then evaporating the organic solvent by drying.

Patent Document 2 discloses a method of obtaining an epoxy resin composition for a towpreg that has a good impregnation property into a reinforcing fiber bundle and a high glass transition temperature (Tg) after curing, and can exhibit high heat resistance by controlling the viscosity of an epoxy resin composition containing a polyfunctional epoxy resin.

Patent Document 3 discloses a method of obtaining a towpreg that is excellent in an unwinding property and spreadability on a mandrel by controlling the viscosity of an epoxy resin composition to be low.

### PRIOR ART DOCUMENTS

### PATENT DOCUMENTS

Patent Document 1: Japanese Patent Laid-open Publication No. S58-113226
Patent Document 2: Japanese Patent Laid-open Publication No. 2016-190920
Patent Document 3: Japanese Patent Laid-open Publication No. H09-87365

### SUMMARY OF THE INVENTION

### PROBLEMS TO BE SOLVED BY THE INVENTION

However, in the method described in Patent Document 1, the organic solvent may remain in the towpreg, and voids may be generated in the obtained fiber reinforced composite to deteriorate the physical properties. Furthermore, there is a problem that the equipment cost increases due to the step of drying the organic solvent.

Although the method described in Patent Document 2 improves the impregnation property into the reinforcing fiber bundle and high heat resistance of the cured product, the 0° tensile strength translation rate of the fiber reinforced composite is not necessarily sufficient.

Although the towpreg described in Patent Document 3 is excellent in the unwinding property and the spreadability on a mandrel, the epoxy resin composition has a low viscosity, so that the epoxy resin composition in an inner layer of a hollow container or a cylinder may exude to the outside due to tightening during molding by the filament winding method.

In the view of the above-mentioned background, an object of the present invention is to provide a towpreg capable of providing a fiber reinforced composite that is excellent in an unwinding property from a bobbin and filament winding moldability, and is excellent in 0° tensile strength translation rate and heat resistance. Another object of the present invention is to provide a pressure vessel having a great weight saving effect.

### SOLUTIONS TO THE PROBLEMS

The present invention employs the following means in order to solve the above-mentioned problems. That is, the towpreg of the present invention is a towpreg containing an epoxy resin composition, and a reinforcing fiber bundle impregnated with the epoxy resin composition, the epoxy resin composition containing materials [A] to [D] shown below, the towpreg containing 10 to 90 parts by mass of the material [A] and 10 to 50 parts by mass of the material [B] with respect to 100 parts by mass of an epoxy resin component contained in the epoxy resin composition, the epoxy resin composition having a viscosity (η₂₅) at 25°C of 1 to 40 Pa·s and a viscosity (η₄₀) at 40°C of 0.2 to 5 Pa·s, a cured product of the epoxy resin composition having a glass transition temperature (Tg) of 95°C or higher:
the material [A] a bisphenol epoxy resin;
the material [B] an unsubstituted or substituted N,N-diglycidyl aniline;
the material [C] dicyandiamide; and
the material [D] a curing accelerator.

Furthermore, the method for manufacturing a towpreg of the present invention is a method for manufacturing a towpreg, the method including the step of bringing a rotary roll into contact with at least one surface of a reinforcing fiber bundle, the rotary roll having a coating film of the epoxy resin composition.

Furthermore, the method for manufacturing a pressure vessel of the present invention is a method including the step of winding the towpreg around a liner.

### EFFECTS OF THE INVENTION

The epoxy resin composition used in the towpreg of the present invention has a highly controlled viscosity. Therefore, the epoxy resin composition is excellent in an impregnation property into the reinforcing fiber bundle and excellent in productivity because there is a small loss of the resin during manufacturing. In addition, the towpreg to which the epoxy resin composition for a towpreg of the present invention is applied is excellent in an unwinding property from a bobbin and filament winding moldability, and thus is excellent in productivity of a fiber reinforced composite. Furthermore, the towpreg can provide a fiber reinforced composite with excellent 0° tensile strength translation rate. Thus, the towpreg can be used in many fields such as aerospace, automobiles, railroad vehicles, ships, civil engineering and construction, and sporting goods, and in particular, it can be suitably used in a pressure vessel to be filled with hydrogen gas or the like used in a fuel cell.

### EMBODIMENTS OF THE INVENTION

The present invention has the following structure. That is, the present invention is a towpreg containing an epoxy resin composition, and a reinforcing fiber bundle impregnated with the epoxy resin composition, the epoxy resin composition containing materials [A] to [D] shown below, the towpreg containing 10 to 90 parts by mass of the material [A] and 10 to 50 parts by mass of the material [B] with respect to 100 parts by mass of an epoxy resin component contained in the epoxy resin composition, the epoxy resin composition having a viscosity (η₂₅) at 25°C of 1 to 40 Pa·s and a viscosity (η₄₀) at 40°C of 0.2 to 5 Pa·s, a cured product of the epoxy resin composition having a glass transition temperature (Tg) of 95°C or higher:
the material [A] a bisphenol epoxy resin;
the material [B] an unsubstituted or substituted N,N-diglycidyl aniline;
the material [C] dicyandiamide; and
the material [D] a curing accelerator.

The bisphenol epoxy resin, which is the material [A] in the present invention, is blended in order to control the viscosity of the epoxy resin composition and impart excellent productivity to the manufacturing process of the towpreg and the molding process for the fiber reinforced composite. Here, "bisphenol" is a general term for compounds having two hydroxyphenyl groups, and the bisphenol epoxy resin refers to a bifunctional epoxy resin having a chemical structure in which a bisphenol is glycidyletherified. Examples of the epoxy resin of the material [A] include a bisphenol A epoxy resin, a bisphenol F epoxy resin, and a bisphenol S epoxy resin. Among them, the bisphenol A epoxy resin can be preferably used because it is excellent in a balance among the viscosity, heat resistance, and mechanical properties. These may be used alone or in combination of two or more. The blending amount of the material [A] (when a plurality of kinds of materials [A] is used, the total blending amount of them) needs to be 10 to 90 parts by mass in 100 parts by mass of the total epoxy resin component containing the material [A] and the material [B], and it is more preferably 10 to 80 parts by mass, and further preferably 10 to 70 parts by mass.

It is more preferable that the material [A] contain a bisphenol A epoxy resin as an essential component, and the content of the bisphenol A epoxy resin in the material [A] be 10 to 100% by mass.

In the case of the above-mentioned ranges, it is possible to obtain an epoxy resin composition for a towpreg that provides a fiber reinforced composite having an excellent balance among the viscosity, heat resistance, and mechanical properties.

The unsubstituted or substituted N,N-diglycidyl aniline, which is the material [B] of the present invention, serves to control the viscosity of the epoxy resin composition and impart excellent productivity in the manufacturing process of the towpreg and the molding process for the fiber reinforced composite by combining with the material [A]. Furthermore, the unsubstituted or substituted N,N-diglycidyl aniline imparts excellent heat resistance and excellent 0° tensile strength translation rate to the fiber reinforced composite obtained by molding the towpreg. The unsubstituted or substituted N,N-diglycidyl aniline is specifically a bifunctional epoxy resin having a structure represented by the following (formula 1). 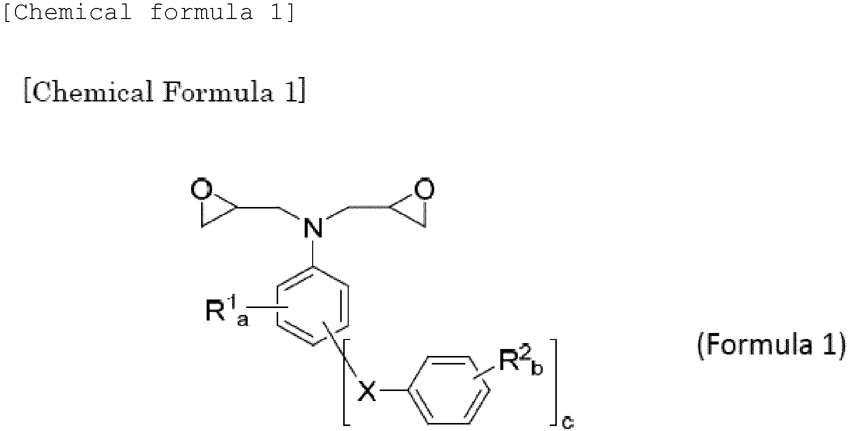 wherein R¹ and R² each represent at least one selected from the group consisting of a hydrogen atom, an aliphatic hydrocarbon group having 1 to 4 carbon atoms, an alicyclic hydrocarbon group having 3 to 6 carbon atoms, an aromatic hydrocarbon group having 6 to 10 carbon atoms, a halogen atom, an acyl group, a trifluoromethyl group, and a nitro group, when there are a plurality of groups R¹, the groups R¹ may be the same or different, when there are a plurality of groups R², the groups R² may be the same or different, X represents one selected from -O-, -S-, -CO-, - COO-, and -SO₂-, and the subscripts a, b, and c each represent the number of substituents and are each integers from 0 to 5.

As specific examples of the epoxy resin of the material [B], for example, N,N-diglycidyl aniline, N,N-diglycidyl-o-toluidine, and N,N-diglycidyl-p-phenoxyaniline can be preferably used. These may be used alone or in combination of two or more. The blending amount of the material [B] needs to be 10 to 50 parts by mass in 100 parts by mass of the total epoxy resin component containing the material [A] and the material [B]. When the material [B] contains various epoxy resins having different chemical structures, the blending amount of the material [B] is the total blending amount of them. The blending amount of the material [B] is more preferably 20 to 50 parts by mass, still more preferably 30 to 50 parts by mass, and further preferably 30 to 40 parts by mass. When the blending amount of the material [B] is within the range, it is possible to obtain an epoxy resin composition for a towpreg that provides a fiber reinforced composite having an excellent balance among the productivity, heat resistance, and mechanical properties typified by the 0° tensile strength translation rate. The 0° tensile strength translation rate is an index of degree of utilization of the strength of the reinforcing fiber by the fiber reinforced composite. As for the fiber reinforced composite with high 0° tensile strength translation rate, under the same kind and amount of the reinforcing fiber, a higher 0° tensile strength is obtained. The 0° tensile strength translation rate of the towpreg is represented by (0° tensile strength of the towpreg cured product)/(strand strength of the reinforcing fiber) × 100. A higher value of the rate indicates that higher performance of the reinforcing fiber is extracted, and it can be said that the reinforcing fiber is a material with a great weight saving effect.

Dicyandiamide, which is the material [C] contained in the epoxy resin composition, is a thermally activatable latent curing agent. Here, the thermally activatable latent curing agent refers to a curing agent that is in a state of low activity at a temperature equal to or lower than a predetermined temperature, but that has a property of changing into a state with high curing activity by receiving a certain heat history to cause a phase change or a chemical change. Since the material [C] is a curing agent that exhibits excellent stability as an epoxy resin composition in addition to serving for the purpose of obtaining the epoxy resin composition for a towpreg that provides a fiber reinforced composite having an excellent balance between heat resistance and mechanical properties, the material [C] is blended for the purpose of preventing thickening of the epoxy resin composition during the preparation process of the epoxy resin composition, the manufacturing process of the towpreg, and the storage period of the towpreg. By preventing the thickening of the epoxy resin composition in the processes and the period, the impregnated state of the epoxy resin composition in the towpreg can be improved, and the good unwinding property at the time of molding can be kept. The blending amount of the material [C] is preferably 2 to 20 parts by mass with respect to 100 parts by mass of the total epoxy resin component containing the material [A] and the material [B], more preferably 3 to 15 parts by mass, further preferably 3 to 12 parts by mass, and most preferably 3 to 10 parts by mass. When the blending amount of the material [C] is within the range, a good cured product can be obtained without causing deterioration of heat resistance and mechanical properties due to insufficient curing or excessive generation of reaction heat.

The material [D] in the present invention is a curing accelerator. The material [D] is used to enhance the curing properties of the material [C]. As the curing accelerator, for example, a tertiary amine, a Lewis acid complex, an onium salt, imidazole, and a phenol compound can be used alone or in combination of two or more. In particular, urea derivatives such as 3-phenyl-1,1-dimethylurea, 3-(3,4-dichlorophenyl)-1,1-dimethylurea (DCMU), 3-(3-chloro-4-methylphenyl)-1,1-dimethylurea, 4,4'-methylenebis(diphenyldimethylurea), and 2,4-toluenebis(3,3-dimethylurea) can be suitably used in combination as the curing accelerator. Among them, 3-phenyl-1,1-dimethylurea and 3-(3,4-dichlorophenyl)-1,1-dimethylurea can be most preferably used. The curing accelerator can cure the epoxy resin composition at 80 to 150°C when used in combination with dicyandiamide, whereas dicyandiamide alone requires a temperature of 170 to 180°C to cure the epoxy resin composition. The blending amount of the material [D] is appropriately adjusted according to the kind of the curing accelerator used. The blending amount of the material [D] is usually preferably in the range of 0.1 to 10 parts by mass with respect to 100 parts by mass of the total epoxy resin component containing the material [A] and the material [B] because the curing temperature can be adjusted optimally.

The epoxy resin composition used in the towpreg of the present invention can further contain an epoxy resin other than the material [A] and the material [B] as long as the effects of the present invention are not impaired. The epoxy resin other than the material [A] and the material [B] can adjust the balance among mechanical properties, heat resistance, and impact resistance, and various physical properties such as the viscosity according to the purpose.

The epoxy resin composition used in the towpreg of the present invention can contain a thermoplastic resin and a rubber component as long as the effects of the present invention are not lost. The epoxy resin composition can contain a thermoplastic resin soluble in an epoxy resin and organic particles such as thermoplastic resin particles. Examples of the thermoplastic resin soluble in an epoxy resin include polyvinyl acetal resins such as a polyvinyl formal and a polyvinyl butyral, a polyvinyl alcohol, a phenoxy resin, a polyamide, a polyimide, a polyvinyl pyrrolidone, and a polyether sulfone. Examples of the rubber component include crosslinked rubber particles, core-shell rubber particles containing crosslinked rubber particles and a dissimilar polymer graft-polymerized on the surface of the crosslinked rubber particles, and liquid rubbers such as carboxyl group-terminated butadiene nitrile rubber.

The epoxy resin composition used in the towpreg of the present invention needs to have a viscosity (η₂₅) at 25°C of 1 to 40 Pa·s, and the viscosity is more preferably 1 to 15 Pa·s, and further preferably 1 to 3 Pa·s. When the viscosity (η₂₅) is within the range, a towpreg that is excellent in an unwinding property and filament winding moldability can be obtained. Furthermore, since the amount of adhesion to a roller can be reduced, the amount of the loss of resin in the manufacturing process of the towpreg is small, and excellent productivity can be exhibited in the manufacturing process.

The epoxy resin composition used in the towpreg of the present invention needs to have a viscosity (η₄₀) at 40°C of 0.2 to 5 Pa·s, and the viscosity is more preferably 0.2 to 3 Pa·s, and further preferably 0.2 to 1 Pa·s. The epoxy resin composition may be impregnated into the reinforcing fiber bundle in a state where the epoxy resin composition is heated to have reduced viscosity. When the viscosity (η₄₀) at 40°C is within the range, a towpreg having an excellent impregnation property into the reinforcing fiber bundle and a high 0° tensile strength translation rate can be obtained. Furthermore, since dripping of the epoxy resin composition at an impregnated portion can be reduced, the amount of the loss of resin in the manufacturing process of the towpreg is small, and excellent productivity can be exhibited in the manufacturing process.

The epoxy resin composition used in the towpreg of the present invention has a viscosity at 25°C (η₂₅) and a viscosity at 40°C (η₄₀) within the above ranges, so that it is possible to satisfy all of the unwinding property, the filament winding moldability, the reduction of the amount of the loss of resin in the manufacturing process of the towpreg, and the impregnation property into the reinforcing fiber bundle.

As for the epoxy resin composition used in the towpreg of the present invention, the ratio of the viscosity (η₂₅) at 25°C to the viscosity (η₄₀) at 40°C, that is, η₂₅/η₄₀ is preferably 3 to 15, more preferably 3 to 12, and further preferably 3 to 7. A small value of η₂₅/η₄₀ means that the change of the viscosity of the epoxy resin composition due to a temperature change is small. When the value of η₂₅/η₄₀ is within the range, it is possible to reduce the change in the unwinding property due to the change in the operating temperature depending on the location or season.

The cured product of the epoxy resin composition used in the towpreg of the present invention has a glass transition temperature (Tg) of 95°C or higher. When the Tg value of the cured product of the epoxy resin composition is within the range, it is possible to suppress deterioration in mechanical properties in a high temperature environment, and a fiber reinforced composite having excellent environmental resistance can be obtained. The conditions for curing the epoxy resin composition of the present invention are not particularly specified, and are appropriately selected according to the characteristics of the curing agent.

Various known methods can be used to prepare the epoxy resin composition used in the towpreg of the present invention. As known methods, for example, the materials may be kneaded using a machine such as a kneader, a planetary mixer, or a mechanical stirrer, or the materials may be mixed by hand using a beaker and a spatula or the like. Alternatively, the materials may be kneaded using a twin-screw extruder. Dicyandiamide, which is the material [C] of the present invention, is dispersed in the components in a solid state, and when all the components are kneaded at once, dicyandiamide may aggregate to cause poor dispersion. The epoxy resin composition with poor dispersion is not preferable because it causes uneven physical properties in the cured product and poor curing. Therefore, it is preferable to pre-knead the materials with three rolls using a part of dicyandiamide to be blended to obtain a pre-kneaded product and use the pre-kneaded product as a masterbatch.

Next, a method for manufacturing the towpreg of the present invention using the above-mentioned epoxy resin composition is described.

The towpreg of the present invention contains the epoxy resin composition described above, and a reinforcing fiber bundle impregnated with the epoxy resin composition. The reinforcing fiber bundle preferably includes 1,000 to 70,000 filaments having a diameter of 3 to 100 µm.

Examples of the reinforcing fiber used in the towpreg of the present invention include a glass fiber, a carbon fiber, an aramid fiber, a boron fiber, an alumina fiber, and a silicon carbide fiber. Two or more kinds of these fibers may be mixed and used. Among them, the carbon fiber that can provide a lightweight and highly rigid fiber reinforced composite is preferably used. Specific examples of such a carbon fiber include carbon fibers such as an acrylic carbon fiber, a pitch-based carbon fiber and a rayon carbon fiber, and the acrylic carbon fiber having particularly high tensile strength is preferably used.

The mass content (Rc) of the epoxy resin composition in the towpreg of the present invention can be set according to the purpose without particular limitation, and is preferably 20 to 40%, more preferably 20 to 30%, and most preferably 22 to 28%. When the mass content of the epoxy resin composition is 20% or more, it is possible to suppress the occurrence of defects such as an unimpregnated portion and a void inside the obtained fiber reinforced composite. Furthermore, when the mass content of the epoxy resin composition is 40% or less, the volume content of the reinforcing fiber can be increased, so that the mechanical properties of the fiber reinforced composite can be effectively exhibited to contribute to weight saving.

The towpreg of the present invention can be manufactured by various known methods.

For example, the first method is as follows.

The epoxy resin composition is dissolved in an organic solvent such as methyl ethyl ketone or methanol to lower the viscosity, and then the reinforcing fiber bundle is immersed in the low-viscosity epoxy resin composition and the fiber-reinforced bundle is impregnated with the low-viscosity epoxy resin composition. The impregnated fiber reinforced bundle is heated using an oven or the like to evaporate the organic solvent, and a towpreg is obtained.

The second method is as follows.

The epoxy resin composition used in the towpreg is heated to lower the viscosity, and the reinforcing fiber bundle is impregnated with the low-viscosity epoxy resin composition while being immersed in the low-viscosity epoxy resin composition.

The third method is as follows.

A low-viscosity epoxy resin composition obtained by heating is applied onto a rotary roll or released paper to form a film. The film of the epoxy resin on the rotary roll or the released paper is then transferred to one surface or both surfaces of the reinforcing fiber bundle. The transferred film is passed through a bending roll or a pressure roll and pressurized to impregnate the reinforcing fibers with the epoxy resin.

Since there is substantially no residual organic solvent in the towpreg and a high-quality towpreg can be manufactured, the present invention includes the step of bringing a rotary roll into contact with at least one surface of a reinforcing fiber bundle, the rotary roll having a coating film of an uncured resin.

In the towpreg of the present invention, the cured unidirectional material preferably has a 0° tensile strength translation rate of 90% or more. When the 0° tensile strength translation rate is 90% or more, a towpreg having an excellent weight saving effect in the molded product can be manufactured. A higher 0° tensile strength translation rate of the towpreg indicates that higher performance of the reinforcing fiber is extracted, and it can be said that the material has a great weight saving effect.

The towpreg of the present invention can be used in many fields such as aerospace, automobiles, railroad vehicles, ships, civil engineering and construction, and sporting goods, and in particular, the towpreg can be suitably used in a pressure vessel to be filled with hydrogen gas or the like used in a fuel cell.

Furthermore, a second embodiment of the present invention is a pressure vessel obtained by winding the towpreg of the present invention around a liner. The pressure vessel that is the second embodiment of the present invention is preferably manufactured by a filament winding method. The filament winding method is a manufacturing method including a filament winding step of winding the towpreg around a liner to obtain a pressure vessel intermediate, and a curing step of heating the obtained pressure vessel intermediate to cure an epoxy resin composition, and is a method of obtaining a molded product including a fiber reinforced composite layer including a fiber reinforced composite having a liner, a cured product of an epoxy resin composition covering the liner, and a reinforcing fiber bundle. A metal liner or a resin liner such as a polyethylene liner or a polyamide liner is used for manufacturing the pressure vessel, and a desired material can be appropriately selected. Furthermore, the liner shape can also be appropriately selected according to the desired shape.

The pressure vessel that is the second embodiment of the present invention is suitably used in a high-pressure hydrogen tank of a fuel cell system, a high-pressure natural gas tank, and an air respirator tank.

### EXAMPLES

Hereinafter, the present invention is described more specifically with reference to examples, but the present invention is not limited to the description of these examples.

The materials used in the examples are as follows.

### <Materials used>

### Material [A]

- "jER (registered trademark)" 828 (liquid bisphenol A epoxy resin, manufactured by Mitsubishi Chemical Corporation)
- "jER (registered trademark)" 1004 (solid bisphenol A epoxy resin, manufactured by Mitsubishi Chemical Corporation)
- YDF-170 (liquid bisphenol F epoxy resin, manufactured by NIPPON STEEL & SUMIKIN CHEMICAL CO., LTD.)

### Material [B]

- GAN (N,N-diglycidyl aniline, manufactured by Nippon Kayaku Co., Ltd.)
- GOT (N,N-diglycidyl-o-toluidine, manufactured by Nippon Kayaku Co., Ltd.)

### Other epoxy resins

- "jER (registered trademark)" 630 (p-aminophenol epoxy resin, manufactured by Mitsubishi Chemical Corporation)
- YDCN-701 (o-cresol novolac epoxy resin, manufactured by NIPPON STEEL & SUMIKIN CHEMICAL CO., LTD.)

### Material [C]

- "jERCURE (registered trademark)" DICY7 (dicyandiamide, manufactured by Mitsubishi Chemical Corporation)

### Material [D]

- DCMU99 (3-phenyl-1,1-dimethylurea, 3-(3,4-dichlorophenyl)-1,1-dimethylurea, manufactured by Hodogaya Chemical Co., Ltd.)

"TORAYCA (registered trademark)" T720SC-36K (manufactured by Toray Industries, Inc., tensile strength: 5880 MPa, number of filaments: 36000, total fineness: 1650 tex, density: 1.8 g/cm³)

### <Method for preparing epoxy resin composition>

The material [A] and other epoxy resins as needed were put into a beaker, and the temperature was raised to 110°C and heat kneading was performed for 30 minutes. After that, the temperature was lowered to 30°C or lower while the contents were being kneaded, and the material [B], the material [C], the material [D], and other curing agent and curing accelerator as needed were added and kneaded for 10 minutes to obtain an epoxy resin composition. Table 1 shows the compounding ratio of components in examples and comparative examples.

### <Method for measuring viscosity of epoxy resin composition>

The viscosity of the epoxy resin composition was measured at a rotational speed of 10 revolutions/minute using an E-type viscometer (manufactured by Toki Sangyo Co., Ltd., TVE-30H) equipped with a standard cone rotor (1°34' x R24) according to "Method for measuring viscosity by conical-flat plate type rotational viscometer" in JIS Z8803 (2011). The inside of a sample cup was adjusted to the measurement temperature (25°C or 40°C), and the displayed value was read when the displayed value became stable 1 minute or more after the epoxy resin composition was added into the sample cup. In Table 1, the viscosity at 25°C is expressed as η₂₅, and the viscosity at 40°C is expressed as η₄₀.

### <Method for producing resin cured plate>

First, the epoxy resin composition was defoamed in a vacuum and then injected into a mold set to have a thickness of 2 mm by a spacer made of "Teflon (registered trademark)". Next, the temperature was raised from room temperature to 130°C in a hot air oven at a heating rate of 2.5°C/min, and then the epoxy resin composition was kept at 130°C for 1.5 hours to be cured. Subsequently, the temperature was lowered from 130°C to room temperature, and the cured epoxy resin composition was removed from the mold to prepare a resin cured plate having a thickness of 2 mm.

### <Measurement of glass transition temperature>

A test piece having a width of 12.7 mm and a length of 45 mm was cut out from the resin cured plate having a thickness of 2 mm, and DMA measurement was performed in the temperature range of 30 to 250°C using a viscoelasticity measuring device (ARES, manufactured by TA Instruments) under the conditions of a torsional vibration frequency of 1.0 Hz at a heating rate of 5.0°C/min. The glass transition temperature (Tg) was defined as the temperature at the intersection of the tangent in the glass state and the tangent in the transition state in the storage elastic modulus G' curve.

### <Method for producing towpreg>

The epoxy resin composition adjusted to a temperature of 20 to 60°C was applied to one surface of the carbon fiber bundle "TORAYCA (registered trademark)" T720SC-36K using a towpreg manufacturing device equipped with a creel, a kiss roll, a nip roll, and a winder. Then, the carbon fiber bundle was passed through the nip roll to impregnate the reinforcing fiber bundle with the epoxy resin composition to the inside, whereby a towpreg having an Rc value of 24% was obtained. At this time, the amount of the epoxy resin composition attached to each roller of the device and the epoxy resin composition dripped and lost, that is, the amount of the loss of resin was visually evaluated and the towpreg was ranked in three levels of A, B, and C according to the following criteria.
A: The amount of the loss of resin is small.
B: The amount of the loss of resin is medium.
C: The amount of the loss of resin is large.

### <Method for evaluating unwinding property>

The towpreg was attached to a filament winding device, the state when the towpreg was unwound at a speed of 50 m/min was visually evaluated, and the towpreg was ranked in three levels of A, B, and C according to the following criteria.
A: The towpreg sticks to the bobbin weakly, and can be easily unwound.
B: The unwinding property is at an intermediate level between A and C.
C: The towpreg stuck to the bobbin so strongly that it could not follow the direction of pulling out the tow and came off from the bobbin later.

### <Filament winding moldability>

The towpreg was attached to the filament winding device, the state when the tank was formed by the filament winding method was visually evaluated, and the towpreg was ranked in three levels of A, B, and C according to the following criteria.
A: When the towpreg was wound around a liner, there was no slippage or resin seepage, and a high-quality tank was produced.
B: The filament winding moldability is at an intermediate level between A and C.
C: There were cases where a high-quality tank was not obtained due to the slippage and resin seepage.

### <Measurement of 0° tensile strength translation rate of towpreg cured product>

The towpreg was sandwiched between metal plates with a released film attached thereto. While constant tension was applied to the tow, the temperature was raised from room temperature to 130°C in a hot air oven at a heating rate of 2.5°C/min, and then the towpreg was kept at 130°C for 1.5 hours to cure the epoxy resin composition. A glass fiber reinforced plastic tab having a width of 14 mm and a length of 50 mm was adhered to both ends of the towpreg containing the cured epoxy resin composition so that the distance between the tabs was 150 mm, and a test piece were produced. The test piece was measured for breaking load per sectional area in the fiber longitudinal direction (0° direction) at a crosshead speed of 3.0 mm/min using an Instron universal testing machine (manufactured by Instron). The sectional area of the test piece was determined by dividing the mass per unit length of the reinforcing fiber by the density. In addition, the 0° tensile strength translation rate was calculated using the average value of the tensile strength of 10 test pieces. The 0° tensile strength translation rate (%) was calculated by 0° tensile strength of the towpreg cured product/strand strength of the reinforcing fiber × 100. The strand strength of the reinforcing fiber is determined according to the following procedure in accordance with JIS R7608:2007 "Resin-impregnated strand test method".

The resin-impregnated strand of the carbon fiber bundle to be measured was prepared by impregnating a carbon fiber or a graphitized fiber with a composition containing 3,4-epoxycyclohexylmethyl-3,4-epoxycyclohexylcarboxylate (100 parts by mass), boron trifluoride monoethyl amine (3 parts by mass) and acetone (4 parts by mass) and curing the composition at a temperature of 125°C for 30 minutes. The number of resin-impregnated strands of the carbon fiber to be measured was 6, and the average value of measurement results was taken as the strand strength. The measurement elongation range of the elastic modulus in tension was set in the range of an elongation of 0.3 to 0.7%. In the present example, "CELLOXIDE (registered trademark)" 2021P manufactured by DAICEL CHEMICAL INDUSTRIES, LTD. was used as 3,4-epoxycyclohexylmethyl-3,4-epoxycyclohexylcarboxylate.

### (Example 1)

Eighty parts by mass of "jER (registered trademark)" 828 as the material [A], 20 parts by mass of GAN as the material [B], 7 parts by mass of "jERCURE (registered trademark)" DICY7 as the material [C], and 2 parts by mass of DCMU99 as the material [D] were mixed, and an epoxy resin composition was prepared according to the method for producing the epoxy resin composition described above. The epoxy resin composition had a viscosity (η₂₅) at 25°C of 4.6 Pa·s and a viscosity (η₄₀) at 40°C of 0.84 Pa·s, and the ratio between the viscosities (η₂₅/η₄₀) was 5.4. The glass transition temperature (Tg) of the resin cured plate was 130°C. The evaluation result of the amount of the loss of resin during the manufacture of towpreg was A, the evaluation result of the unwinding property was A, and the evaluation result of the filament winding moldability was A. The results of these three evaluations are shown in Table 1 as indicators of "productivity". The 0° tensile strength translation rate of the towpreg cured product was 92%.

### (Examples 2 to 4)

Epoxy resin compositions, resin cured plates, and towpreg cured products were produced by the same method as in Example 1 except that the resin compositions were changed as shown in Table 1. The evaluation results are shown in Table 1.

### (Comparative Example 1)

An epoxy resin composition, a resin cured plate, and a towpreg cured product were produced by the same method as in Example 1 except that the material [B] was not blended. The resin composition and the evaluation result are shown in Table 1. The viscosity, the Tg value, and productivity were good, but the 0° tensile strength translation rate of the towpreg cured product was 88% and insufficient.

### (Comparative Example 2)

An epoxy resin composition, a resin cured plate, and a towpreg cured product were produced by the same method as in Example 1. The resin composition and the evaluation result are shown in Table 1. The Tg value and the 0° tensile strength translation rate of the towpreg cured product were good, but the evaluation results of the amount of the loss of resin and the unwinding property were ranked C since the viscosity was high, and the productivity was insufficient.

### (Comparative Example 3)

An epoxy resin composition, a resin cured plate, and a towpreg cured product were produced by the same method as in Example 1. The resin composition and the evaluation result are shown in Table 1. The viscosity, the Tg value, and productivity were good, but the 0° tensile strength translation rate of the towpreg cured product was 89% and insufficient.

### (Comparative Example 4)

An epoxy resin composition, a resin cured plate, and a towpreg cured product were produced by the same method as in Example 1. The resin composition and the evaluation result are shown in Table 1. The Tg value and the 0° tensile strength translation rate of towpreg cured product were good, but the filament winding moldability was ranked C since the viscosity was low, and the productivity was insufficient.

**[Table 1]**

| Classification | Constituent element | Component | Example 1 | Example 2 | Example 3 | Example 4 | Comparative Example 1 | Comparative Example 2 | Comparative Example 3 | Comparative Example 4 |
|---|---|---|---|---|---|---|---|---|---|---|
| Epoxy resin | [A] | "jER"828 | 80 | 70 | 60 | 40 | 100 | 60 | 18 | |
| | | "jER"1004 | | | | 20 | | 20 | | |
| | | YDF-170 | | | | | | | 65 | |
| | [B] | GAN | 20 | 30 | 40 | 40 | | 20 | 5 | 50 |
| | | GOT | | | | | | | | 10 |
| | Others | "jER"630 | | | | | | | 5 | |
| | | YDCN701 | | | | | | | | 40 |
| Curing agent (dicyandiamide) | [C] | "jERCURE" DICY7 | 7 | 7.3 | 7.6 | 6.6 | 6.3 | 6 | 6 | 4 |
| Curing accelerator | [D] | DCMU99 | 2 | 2 | 2 | 2 | 2 | 2 | 3 | 6 |
| Evaluation results | Viscosity at 25°C (η₂₅) (Pa·s) | | 4.6 | 2.9 | 1.9 | 25 | 15 | 86 | 7.0 | 0.80 |
| | Viscosity at 40°C (η₄₀) (Pa·s) | | 0.84 | 0.58 | 0.42 | 3.0 | 1.9 | 11 | 0.53 | 0.15 |
| | η₂₅/η₄₀ | | 54 | 5.0 | 4.5 | 8.4 | 8.0 | 7.8 | 13 | 54 |
| | Tg(°C) | | 130 | 122 | 114 | 105 | 139 | 120 | 123 | 100 |
| | Productivity | Roller dirt | A | A | A | B | B | C | A | A |
| | | Unwinding property | A | A | A | B | B | C | B | A |
| | | Filament winding moldability | A | A | A | A | A | A | A | C |
| | Strength utilization rate (%) | | 92 | 93 | 95 | 96 | 88 | 93 | 89 | 91 |

### INDUSTRIAL APPLICABILITY

The towpreg of the present invention can provide a fiber reinforced composite that is excellent in an unwinding property from a bobbin and process passability and that has a very high 0° tensile strength translation rate, thus the towpreg can be used in many fields such as aerospace, automobiles, railroad vehicles, ships, civil engineering and construction, and sporting goods, and in particular, the towpreg can be suitably used in a pressure vessel to be filled with hydrogen gas or the like used in a fuel cell.

## Claims

1. A towpreg comprising:
an epoxy resin composition, and
a reinforcing fiber bundle impregnated with the epoxy resin composition,
the epoxy resin composition containing materials [A] to [D] shown below,
the towpreg containing 10 to 90 parts by mass of the material [A] and 10 to 50 parts by mass of the material [B] with respect to 100 parts by mass of an epoxy resin component contained in the epoxy resin composition,
the epoxy resin composition having a viscosity (η₂₅) at 25°C of 1 to 40 Pa·s and a viscosity (η₄₀) at 40°C of 0.2 to 5 Pa·s,
a cured product of the epoxy resin composition having a glass transition temperature (Tg) of 95°C or higher:
the material [A] a bisphenol epoxy resin;
the material [B] an unsubstituted or substituted N,N-diglycidyl aniline;
the material [C] dicyandiamide; and
the material [D] a curing accelerator.

2. The towpreg according to claim 1, wherein the material [A] contains a bisphenol A epoxy resin as an essential component, and a content of the bisphenol A epoxy resin in the material [A] is 10 to 100% by mass.

3. The towpreg according to claim 2, wherein the epoxy resin composition consists of the bisphenol A epoxy resin, the unsubstituted or substituted N,N-diglycidyl aniline, dicyandiamide, and the curing accelerator.

4. The towpreg according to any one of claims 1 to 3, wherein the material [B] is at least one selected from the group consisting of N,N-diglycidyl aniline, N,N-diglycidyl-o-toluidine, and N,N-diglycidyl-p-phenoxyaniline.

5. The towpreg according to any one of claims 1 to 3, wherein the material [B] contains at least one selected from the group consisting of N,N-diglycidyl aniline, N,N-diglycidyl-o-toluidine, and N,N-diglycidyl-p-phenoxyaniline.

6. The towpreg according to any one of claims 1 to 5, wherein the material [D] is a urea derivative.

7. The towpreg according to any one of claims 1 to 6, wherein a ratio of the viscosity (η₂₅) at 25°C to the viscosity (η₄₀) at 40°C, that is, η₂₅/η₄₀ of the epoxy resin composition is 3 to 15.

8. The towpreg according to any one of claims 1 to 7, wherein the epoxy resin composition has a viscosity (η₂₅) at 25°C of 1 to 3 Pa·s and a viscosity (η₄₀) at 40°C of 0.2 to 1 Pa·s.

9. The towpreg according to any one of claims 1 to 8, wherein the cured product has a 0° tensile strength translation rate of 90% or more.

10. A method for manufacturing a towpreg, the method comprising the step of bringing a rotary roll into contact with at least one surface of a reinforcing fiber bundle, the rotary roll having a coating film of the epoxy resin composition according to any one of claims 1 to 9.

11. A method for manufacturing a pressure vessel, the method comprising the step of winding the towpreg according to any one of claims 1 to 9 around a liner.
